# EUROPÄISCHE PATENTANMELDUNG

(11) **EP 0 874 304 A2**
(43) Veröffentlichungstag der Anmeldung: **28.10.1998**
(21) Anmeldenummer: 98106201.1
(22) Anmeldetag: 04.04.1998
(51) Int. Cl.: G06F 3/02

(54) **Alphanumerische Tastatur für Kraftfahrzeuge**

(30) Priorität: 26.04.1997 DE 29707574 U
(71) Anmelder: Mannesmann VDO Aktiengesellschaft, 60388 Frankfurt am Main (DE)
(72) Erfinder: Dörrie, Christian, Dipl.-Ing. (FH), 78089 Unterkirnach (DE); Koch, Siegfried, Dipl.-Ing. (FH), 78056 Villingen-Schwenningen (DE)

(57) **Zusammenfassung**

Es wird eine Tastatur bestehend aus einem Bodenteil (1), einer Leiterplatte (2), einer Tastenmatte (27) und einem mit dem Bodenteil (1) verbindbaren Frontrahmen (34) vorgeschlagen. Die Tastenmatte (27) ist einer unmittelbar mit dem Bodenteil (1) verschraubten Leiterplatte (2) zugeordnet und mittels angeformter Rastzapfen (28) an dieser befestigt. Beim Verbinden des Frontrahmens (34) mit dem Bodenteil (1) geht einerseits eine Labyrinthdichtung zwischen den Seitenwänden (18, 19, 20, 21) des Bodenteils (1) und dem Frontrahmen (34) in Eingriff andererseits liegt der Frontrahmen (34) auf einem Rand (40) der Tastenmatte (27) elastisch auf und greift zusätzlich mittels einer umlaufenden Rippe (41) in die Tastenmatte (27) ein.

## Beschreibung

Die Erfindung betrifft eine alphanumerische Tastatur für Kraftfahrzeuge mit einem Bodenteil, einer Leiterplatte, welcher die Tasten der Tastatur zugeordnet sind und einem mit dem Bodenteil verbindbaren Frontrahmen.

Eine derartige Tastatur, die im Systemverbund mit wenigstens einem geeigneten Rechner und diesem zugeordneten Speichermitteln sowie einem Display gegebenenfalls auch mit Telekommunikationsmitteln steht, dient der Informationseingabe und/oder der Informationsanwahl beispielsweise bei der Auftragsbearbeitung in Nutzfahrzeugen, welche im Verteiler- oder Sammelbetrieb oder für Lade- und Transportaufgaben im Steinbruch und im Baustellenverkehr eingesetzt sind.

Dies bedeutet einen Einsatz der Tastatur unter extremsten Bedingungen, insbesondere was Temperaturschwankungen, Erschütterungen sowie Staub- und Feuchtigkeitseinwirkungen anbelangt, zumal es beim Reinigen der Fahrerhäuser insbesondere von Baustellenfahrzeugen üblich ist, diese auszuspritzen.

Auf der anderen Seite besteht die Forderung nach einer möglichst wirtschaftlichen Fertigung einer solchen Tastatur, was eine geringe Bauteileanzahl sowie wenig und einfache Montagearbeitsgänge voraussetzt. Außerdem sind relativ grobe Fertigungstoleranzen in Kauf zu nehmen, so daß die Gefahr von Beeinträchtigungen der Funktionssicherheit besteht, insbesondere wenn es sich, wie in diesem Falle, um maßlich relativ große und spritzgießtechnisch hergestellte Teile handelt.

Die Aufgabe der vorliegenden Erfindung bestand somit darin, den konstruktiven Aufbau einer Tastatur derart zu optimieren, daß er den Belangen der Serienfertigung gerecht wird und andererseits die betreffende Tastatur derart robust gebaut ist, daß sie in dem geschilderten Einsatzmilieu eine ausreichende Funktionssicherheit bietet.

Die Lösung dieser Aufgabe beschreibt der Anspruch 1. Weitere Ausgestaltungen gehen aus den Unteransprüchen hervor.

Der entscheidende Vorteil, den die Erfindung bietet ist, insbesondere in der Verwendung der Tastenmatte in Kombination mit einer geeigneten Gestaltung des Frontrahmens zu sehen. Dieses Konzept ergibt, von dem dadurch möglichen flachen Aufbau abgesehen, aufgrund der elastischen Auflage des Frontrahmens auf der Tastenmatte eine geschlossene Frontfläche, mit anderen Worten eine staub- und wasserdichte, frontseitige Abdeckung der Leiterplatte. Das heißt, die Frontseite der Tastatur kann abgewaschen oder abgeblasen werden. Dabei bietet die zwischen dem Bodenteil und dem Frontrahmen vorgesehene Labyrinthdichtung andererseits die Möglichkeit eines klimatischen Austauschs, was ebenfalls zu der angestrebten fahrzeugtauglichen Tastatur beiträgt.

In diesem Sinne ist es ferner von Vorteil, daß lediglich vier große Bauteile zusammengefügt werden müssen, womit sich die Montage sehr vereinfacht und letztlich automatisiert werden kann. Das heißt, daß zunächst die Leiterplatte mit dem Bodenteil verschraubt wird, nachfolgend die Tastenmatte mit der Leiterplatte durch Verrasten ebenfalls fest verbunden wird und danach der Frontrahmen mit dem Bodenteil verschraubt wird. Insoweit stellt die gefundene Konstruktion auch eine starre und somit rüttelsichere Bauform dar, die auch den mechanischen Anforderungen hinsichtlich Fahrzeugtauglichkeit gerecht wird.

Außerdem sei erwähnt, daß die Frontflächen der Tasten im wesentlichen in bzw. unterhalb einer durch den Frontrahmen vorgegebenen Ebene liegen. Dadurch läßt sich die Tastatur, wenn sie nicht fest installiert ist, auch tastenseitig ablegen oder als Ablage benutzen, ohne daß Tastenbetätigungen erfolgen und somit ein Dauerstrom fließt. Dabei sind die in der Tastenmatte ausgebildeten Tasten derart gestaltet, daß sie, was bei der vorgesehenen Verwendung in einem Fahrerhaus entscheidend ist, zweifelsfrei fühlbar sind und einen haptisch optimierten Hub aufweisen, das heißt, daß sich die Tastatur deutlich von einer Folientastatur unterscheidet.

Weitere Vorteile ergeben sich aus der nachfolgenden Beschreibung eines Ausführungsbeispiels.

Von den Zeichnungen des Ausführungsbeispiels zeigen:
- Figur 1: eine perspektivisch gestaffelte Darstellung von Draufsichten der entsprechend der Montagefolge zusammenzufügenden Bauteile der Tastatur,

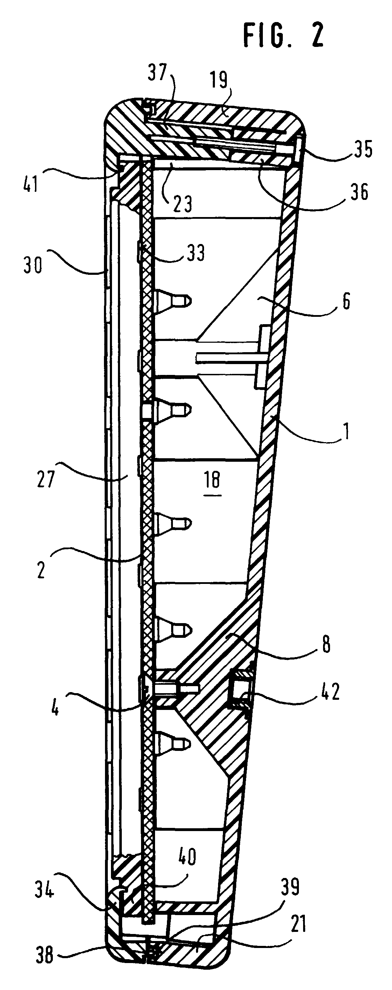

- Figur 2: einen Schnitt gemäß der Schnittlinie A in Figur 1 nach dem Zusammenfügen der Tastatur,
- Figur 3: einen Teilschnitt der Tastatur gemäß der Schnittlinie B in Figur 1.

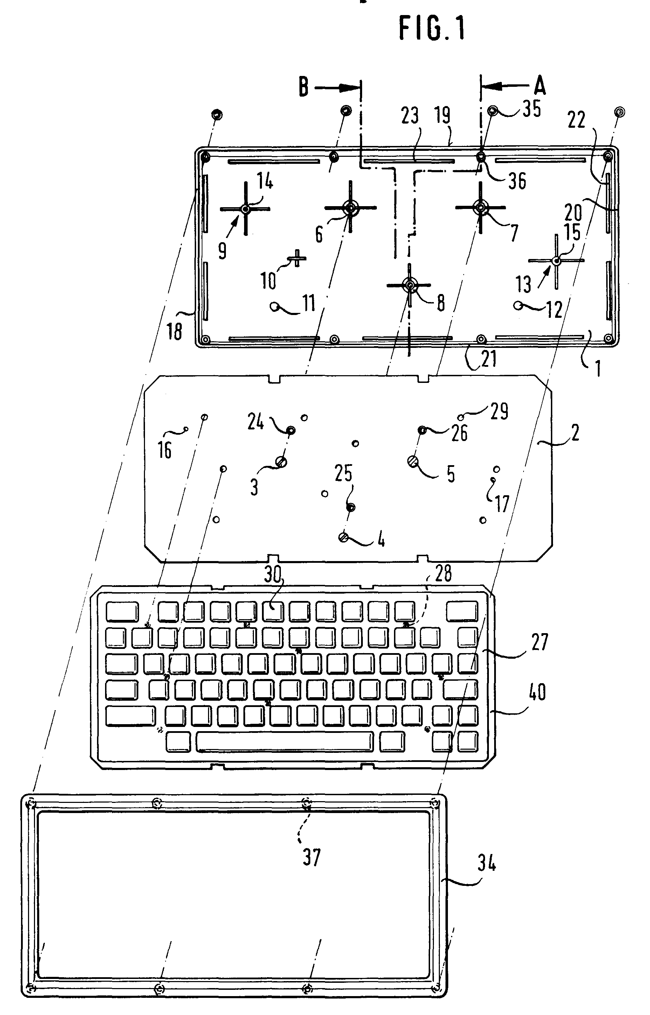

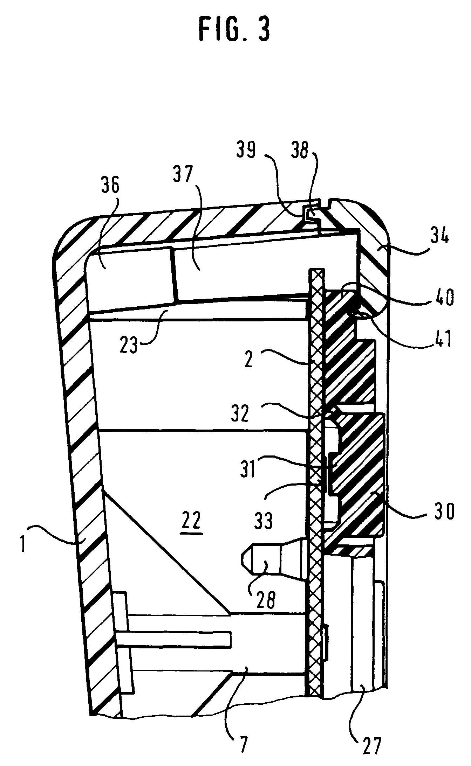

Bei der Montage der Tastatur wird, wie aus der Figur 1 hervorgeht, auf einem vorgelegten Bodenteil 1 zunächst eine Leiterplatte 2 aufgesetzt und mittels Schrauben 3, 4 und 5 befestigt. Den Schrauben 3, 4 und 5 sind hierfür im Bodenteil 1 angeformte Pfeiler 6, 7 und 8 zugeordnet. Stützen 9, 10, 11, 12 und 13 dienen lediglich als zusätzliche Auflage der Leiterplatte 2 und in Verbindung mit Zapfen 14 und 15, denen in der Leiterplatte 2 Bohrungen 16 und 17 zugeordnet sind, dem Ausrichten der Leiterplatte 2 vor deren Verschraubung mit dem Bodenteil 1. Als Auflage für die Leiterplatte 2 dienen ferner im Bodenteil 1 parallel zu dessen Seitenwänden 18, 19, 20 und 21 ausgeformte Wandelemente, von denen zwei mit 22 und 23 bezeichnet sind. In der Leiterplatte 2 angebrachte Bohrungen 24, 25 und 26 dienen dem Durchführen der Schrauben 3, 4, 5. Nach dem Zusammenbau von Bodenteil 1 und Leiterplatte 2 wird eine aus Silikon hergestellte Tastenmatte 27 unmittelbar mit der Leiterplatte 2 verbunden. Hierzu dienen mehrere an der Tastenmatte 27 angeformte Rastzapfen, von denen einer mit 28 bezeichnet ist. Den Rastzapfen 28 sind in der Leiterplatte 2 geeignete Durchgangsbohrungen zugeordnet; eine ist mit 29 bezeichnet. Die Vielzahl der Rastzapfen 28 ergibt eine rutsch- und aufwölbungssichere Verbindung zwischen der Leiterplatte 2 und der Tastenmatte 27. Der Einfachheit halber sind die auf der Leiterplatte 2 angebrachten Leiterbahnen und die den Tasten 30 zugeordneten Kontakte nicht dargestellt. Die in der aus elastischem und isolierendem Material hergestellten Tastenmatte 27 ausgebildeten Tasten 30 sind, wie die Figur 3 zeigt, mit einem kurzen Schaft 31 versehen, der stirnseitig mit einem leitendem Material beschichtet ist, welches bezüglich der auf der Leiterplatte 2 befindlichen Kontakte als Kontaktbrücke dient. Mit 32 ist ein den Übergang zwischen einer Taste 30 und der Tastenmatte 27 bildender Kragen bezeichnet, welcher eine mit einem Schnappeffekt versehene Federfunktion ausübt. In der Tastenmatte 27 sind ferner den Tasten 30 zugeordnete und in Zeilenrichtung verlaufende Freisparungen bzw. Nute ausgebildet, die den für das Betätigen der Tasten erforderlichen Druckausgleich gewährleisten. Eine der Nute ist mit 33 bezeichnet.

Nach der Montage der Tastenmatte 27 wird ein Frontrahmen 34 aufgelegt und von der Rückseite des Bodenteils 1 her mittels mehrerer Schrauben, von denen eine mit 35 bezeichnet ist, mit dem Bodenteil 1 verschraubt. Am Bodenteil 1 angeformte und mit jeweils einer Durchgangsbohrung versehene Säulen 36 dienen den Schrauben 35 als Führungen. Den Säulen 36 zugeordnete, am Frontrahmen 34 ausgebildete Ansätze 37 sind vorgesehen um das Eindrehen der Schrauben 35 in den ansonsten dünnwandigen Rahmen 45 zu ermöglichen.

Der Frontrahmen 34 ist ferner derart ausgebildet, daß er nach dem Verschrauben mit dem Bodenteil 1 auf den nicht näher bezeichneten Stirnflächen der Seitenwände 18, 19, 20, 21 des Bodenteils 1 aufsitzt und mit einer umlaufenden Rippe 38 in eine umlaufende Nut 39 in den Seitenwänden 18, 19, 20, 21 eingreift und auf diese Weise eine Labyrinthdichtung bildet. Andererseits liegt der Frontrahmen nach dem Verschrauben mit dem Bodenteil 1 elastisch auf dem Rand 40 der Tastenmatte 27 auf und greift zusätzlich mit einer umlaufenden Rippe 41 in den Rand 40 der Tastenmatte 27 ein. Im Zusammenwirken mit einer exakten Abstützung der Leiterplatte 2 auf den parallel zu den Seitenwänden 18, 19, 20, 21 ausgebildeten Rippen 22, 23 ergibt sich auf diese Weise eine sichere Dichtfunktion. Denkbar ist es in diesem Zusammenhang, daß an der Tastenmatte 27 zusätzlich ein umlaufender Wulst ausgebildet ist. Eine mit 42 bezeichnete im Bodenteil 1 eingelassene Mutter dient zusammen mit beispielsweise zwei weiteren, nicht dargestellten gleichartigen Muttern dem Befestigen der Tastatur auf einer Konsole, die gegebenenfalls gelenkig gelagert sein und somit die ergonomisch günstigste Arbeitsposition gewählt werden kann.

Der Vollständigkeit halber sei noch erwähnt, daß die Tastatur mit einem Kabel ausgerüstet sein oder durch Vorsehen eines Batteriefachs sowie eines IR-Senders im Bodenteil 1 auch als autonomes Aggregat ausgebildet sein kann.

## Patentansprüche

1. Alphanumerische Tastatur für Kraftfahrzeuge mit einem Bodenteil, einer Leiterplatte, welcher die Tasten der Tastatur zugeordnet sind und einem mit dem Bodenteil verbindbaren Frontrahmen
**dadurch gekennzeichnet,**
daß eine sämtliche Tasten (30) der Tastatur beinhaltende Tastenmatte (27) vorgesehen ist, welche mit der Leiterplatte (2) unmittelbar verbindbar ist
und
daß der Frontahmen (34) derart ausgebildet ist, daß er beim Verbinden mit dem Bodenteil (1) auf der Tastenmatte (27) randlich elastisch aufliegt.

2. Alphanumerische Tastatur nach Anspruch 1,
**dadurch gekennzeichnet,**
daß zwischen dem Bodenteil (1) und dem Frontrahmen (34) eine Labyrinthdichtung (38, 39) vorgesehen ist.

3. Alphanumerische Tastatur nach Anspruch 1,
**dadurch gekennzeichnet,**
daß an der Tastenmatte (27) Rastzapfen (28) angeformt sind, die rastend mit der Leiterplatte (2) verbindbar sind.

4. Alphanumerische Tastatur nach Anspruch 1,
**dadurch gekennzeichnet,**
daß an dem Frontrahmen (34) eine umlaufende Rippe (41) ausgebildet ist, welche beim Zusammenfügen von Bodenteil (1) und Frontrahmen (34) in eine elastische Wirkverbindung mit dem Rand (40) der Tastenmatte (27) tritt.

5. Alphanumerische Tastatur nach Anspruch 1,
**dadurch gekennzeichnet,**
daß am Bodenteil (1) parallel zu dessen Seitenwänden (18, 19, 20, 21) der Leiterplatte (2) randlich als Auflage dienende Wandelemente (22, 23) ausgebildet sind und die Leiterplatte (2) mit dem Bodenteil (1) verschraubt ist.
